# EUROPEAN PATENT SPECIFICATION

(11) **EP 3 240 678 B1**
(45) Date of publication and mention of the grant of the patent: **21.11.2018**
(21) Application number: 15828860.5
(22) Date of filing: 30.11.2015
(51) Int. Cl.: B29D 30/50

(54) **PROCESS AND APPARATUS FOR LOOPING ANCHORING ANNULAR STRUCTURES IN A PROCESS FOR BUILDING VEHICLE TYRES.**
VERFAHREN UND VORRICHTUNG ZUM WINDEN VON RINGFÖRMIGEN VERANKERUNGSSTRUKTUREN IN EINEM REIFENHERSTELLUNGSVERFAHREN.
PROCÉDÉ ET APPAREIL POUR LE BOUCLAGE DE STRUCTURES ANNULAIRES D'ANCRAGE DANS UN PROCÉDÉ POUR LA FABRICATION DE PNEUS.

(30) Priority: 29.12.2014 IT MI20142257
(43) Date of publication of application: 08.11.2017
(73) Proprietor: Pirelli Tyre S.p.A., 20126 Milano (IT)
(72) Inventor: DE GIGLIO, Domenico, I-20126 Milano (IT); SCARMAGNAN SARAIVA, Henrique, I-20126 Milano (IT); D'ORIA, Francesco, I-20126 Milano (IT); LEPORE, Marco, I-20126 Milano (IT)
(74) Representative: Vittorangeli, Lucia
(86) International application number: PCT/IB2015/059199
(87) International publication number: WO 2016/108100

(56) References cited:
- WO-A2-2010/116253
- US-A- 4 196 036
- US-A- 5 080 738
- US-A- 5 282 912

## Description

The present invention relates to a process and an apparatus for looping anchoring annular structures, in particular in a process for building tyres for vehicle wheels.

The process and the drum of the invention are preferably used in building tyres for automobiles, more particularly in building the carcass structures of such tyres.

Hereinbelow, with the term "loop" it is intended to indicate an annular element comprising one or more threadlike reinforcement elements that are substantially parallel to each other, such as textile or metallic cords, possibly incorporated in, or covered with, a layer of elastomeric material, such annular element being obtained by cutting to size a belt-like element and mutually joining a head portion and an end portion of such belt-like element.

With the term "elastomeric material" it is intended to indicate a composition comprising at least one elastomeric polymer and at least one reinforcement filler. Preferably, such composition also comprises additives such as a crosslinking agent and/or a plasticiser agent. Due to the presence of the crosslinking agent, such material can be cross-linked by means of heating, so as to form the final manufactured product.

The terms "radial" and "axial" and the expressions "radially inner/outer" and "axially inner/outer" are used with reference to the radial direction and the axial direction of a tyre or of a drum used for the looping of the anchoring annular structures of tyres. The terms "circumferential" and "circumferentially" are instead used with reference to the annular extension of the aforesaid tyre/drum.

With the term configuration of an element, it is intended the spatial orientation or arrangement of such element.

A tyre for vehicle wheels generally comprises a carcass structure comprising at least one carcass ply formed by reinforcement cords incorporated in a matrix of elastomeric material. The carcass ply has end flaps respectively engaged with anchoring annular structures. The latter are situated in the zones of the tyre normally identified with the name "beads" and are normally each formed by a substantially circumferential annular insert on which at least one filler insert is applied, in radially outer position. The annular inserts are commonly identified as "bead cores" and have the task of maintaining the tyre firmly fixed to the anchoring seat suitably provided in the wheel rim, thus preventing, during operation, the exit of the radially inner end flap of the tyre from such seat.

At the beads specific reinforcement structures of the anchoring annular structures can be provided, termed "loops", having the function of improving the transmission of torque to the tyre. The region of the beads is in fact particularly active in the transmission of torque from the rim to the tyre during acceleration and braking, and hence in the presence of suitable reinforcement structures in such zone, it ensures that the transmission of the torque occurs with maximum possible reactivity.

In radially outer position with respect to the carcass structure, a crown structure is associated comprising a belt structure and, in radially outer position with respect to the belt structure, a tread band made of elastomeric material.

The belt structure comprises one or more belt layers situated in radial superimposition with respect to each other and having textile or metallic reinforcement cords with cross orientation and/or substantially parallel to the circumferential extension direction of the tyre.

Respective sidewalls made of elastomeric material are applied on the lateral surfaces of the carcass structure, each extended from one of the lateral edges of the tread band up to the respective anchoring annular structure to the beads.

WO 2010/116253, on behalf of the Applicant, provides for the use of two service drums and describes a looping process in which, while on one service drum the deposit of the loop is carried out, on the other service drum the positioning of the anchoring annular structure in radially outer position with respect to the loop is carried out, as well as the turning up of the loop around the anchoring annular structure in order to form the reinforced anchoring annular structure, and also the unloading of the latter. In a further step of the process, the service drums are moved integrally in rotation around the pivoting axis, exchanging position.

The Applicant has observed that by arranging a service drum that is at least partly radially expandable/contractible, as described in WO 2010/116253, it is possible to sequentially loop anchoring annular structures of different size, suitable for tyres having different fitting diameters, consequently increasing the production flexibility.

The Applicant has however observed that the implementation of a process of the type described in WO 2010/116253 obliges sequentially carrying out the positioning of the anchoring annular structure on the service drum, the turning up and the unloading of the reinforced anchoring annular structure and that, due to such sequence of operations, the productivity of the apparatus described in WO 2010/116253 is rather limited.

The Applicant has perceived the need to automatically manage a looping apparatus, increasing the productivity thereof in particular in order to be adapted to the increasingly high levels of productivity of the tyre building plants.

In this perspective, the Applicant has perceived that it can be advantageous to optimise the simultaneous/sequential nature of the actions of a looping process by also exploiting the transfer steps of the looping drums.

The Applicant has therefore found that it is possible to considerable improve the cycle time of the entire building plant and simplify the plant itself by selecting the simultaneous or sequential actions of the looping process and exploiting a transfer action of a looping drum, such as a turning up action.

The present invention, in a first aspect thereof, therefore relates to a process as defined in claim 1 for looping anchoring annular structures in a process for building tyres for vehicle wheels. Preferred embodiments of the process according to the invention are disclosed in the dependent claims 2 to 9.

Preferably provision is made for an action a) of depositing a loop on an annular portion of a radially outer surface of a radially expandable/contractible looping drum, at a loop deposit station.

Preferably provision is made for an action b) of loading an anchoring annular structure on the looping drum in radially outer position with respect to said loop, at a loading station configured for loading the anchoring annular structure on the looping drum.

Preferably provision is made for an action c) of turning up each of the opposite end flaps of said loop on said anchoring annular structure so as to form a looped anchoring annular structure.

Preferably provision is made for an action d) of unloading, from the looping drum, the looped anchoring annular structure, at an unloading station configured for unloading the looped anchoring annular structure from the looping drum.

Preferably provision is made for an action e) of transferring a looping drum between the loop deposit station, the loading station and the unloading station.

Preferably said actions a) to e) define a looping cycle.

Preferably at least the actions a), b) and d) are at least partly carried out simultaneously with each other respectively on at least three different looping drums.

Preferably the action c) is at least partially carried out during the transfer of the looping drum from the loading station to the unloading station.

The present invention, in a second aspect thereof, relates to an apparatus as defined in claim 10, for looping anchoring annular structures of a tyre for vehicle wheels. Preferred embodiments of the apparatus according to the invention are disclosed in dependent claims 11 to 15.

Preferably provision is made for at least three looping drums, wherein each looping drum has a longitudinal axis thereof and is radially expandable/contractible with respect to said longitudinal axis.

Preferably provision is made for a loop deposit station comprising at least one device for feeding the loop towards the looping drum.

Preferably provision is made for a loading station configured for loading the anchoring annular structures on the looping drum comprising loading equipment.

Preferably provision is made for an unloading station configured for unloading the looped anchoring annular structures from the looping drum comprising unloading equipment.

Preferably said loop deposit station, loading station and unloading station are angularly offset from each other.

Preferably provision is made for a turret transfer apparatus on which said looping drums are supported in positions that are angularly offset with respect to each other.

Preferably said turret transfer apparatus is configured for transferring said looping drums between the loop deposit station, the loading station and the unloading station rotating around a transfer axis.

Preferably each looping drum is configured for at least partially turning up said loop around said anchoring structure during its transfer from said loading station to said unloading station.

The Applicant deems that by selecting the actions of depositing the loop, loading the anchoring annular structure and unloading the looped anchoring annular structure to be simultaneous, and by exploiting the transfer between the loading station and the unloading station in order to achieve the turning-up action, the cycle time of the entire building plant considerably decreases and the plant itself is simplified.

The present invention, in at least one of the aforesaid aspects, can have at least one of the following preferred characteristics, taken separately or in combination with the others.

Preferably, said loop deposit station, loading station and unloading station are angularly offset from each other. In this manner, the structure of the apparatus is optimised together with the transfer actions.

Preferably said looping drums are supported by a turret transfer apparatus in positions angularly offset with respect to each other. In this manner, the presence of multiple looping drums is optimised.

Preferably the transfer of the looping drum between the loop deposit station, the loading station and the unloading station is obtained by rotating said turret apparatus around a substantially vertical transfer axis.

Preferably said looping drums are supported by said turret transfer apparatus and transferred between the loop deposit station, the loading station and the unloading station with substantially horizontal longitudinal axis. In this manner the transfer of the drums as well as the actions operated thereon in the various stations are simplified.

Preferably said anchoring annular structures are supplied in a supply configuration by means of a supply device.

Preferably loading an anchoring annular structure on the looping drum comprises picking up said anchoring annular structure from the supply device by means of a first pick-up device.

Preferably loading an anchoring annular structure on the looping drum comprises centring said anchoring annular structure on a load handling device before loading it on the looping drum. In this manner the looping drum is simplified, assigning the centring action to a different device.

Preferably, in order to be loaded on a looping drum, said anchoring annular structure is picked up from the supply device by means of said first pick-up device, arranged and centred on said load handling device, transferred to a loader and fit on the looping drum.

Preferably said loader transfers said anchoring annular structure on the looping drum with a movement coaxial with the longitudinal axis X-X- of the looping drum itself.

Preferably provision is made for moving away said looped anchoring annular structures in a moving-away configuration, wherein said looped anchoring annular structures are moved away by means of a moving-away device. Preferably unloading a looped anchoring annular structure from the looping drum comprises picking up said looped anchoring annular structure by means of a second pick-up device.

Preferably unloading a looped anchoring annular structure from the looping drum comprises transferring said looped anchoring annular structure onto an unloader with a movement coaxial with the longitudinal axis X-X- of the looping drum itself.

Preferably in order to be unloaded from the looping drum, said looped anchoring annular structure is transferred from the looping drum on said unloader, transferred onto an unload handling device, picked up from the second pick-up device and arranged on a moving-away device.

Preferably the action c) is carried out due to a radial expansion/contraction of the looping drum. In this manner, the actuation thereof is simplified, in the course of the transfer of the looping drum.

Preferably said looping drums are supported on said turret transfer apparatus in positions angularly offset with respect to each other, in accordance with said loop deposit station, loading station and unloading station. In this manner the arrangement of the apparatus and the operation thereof are optimised.

Preferably said transfer axis is substantially vertical.

Preferably said angular offset is equal to about 120°.

Preferably said loading equipment comprises a load handling device configured for centring said anchoring annular structure before fitting it on the looping drum. In this manner, the structure of the looping drum is simplified, assigning the centring action to the load handling device.

Preferably said loading equipment comprises a loader configured for transferring said anchoring annular structure on the looping drum with a movement coaxial with the longitudinal axis X-X- of the looping drum itself. Preferably said loading equipment comprises a first pick-up device configured for picking up said anchoring annular structure from a supply device. Preferably said first pick-up device is movable between said supply device and said load handling device.

Preferably said unloading equipment comprises an unloader configured for receiving said looped anchoring annular structure and transferring it to an unload handling device.

Preferably said unloader is configured for receiving said looped anchoring annular structure according to a movement coaxial with the longitudinal axis X-X- of the looping drum itself.

Preferably said unloading equipment comprises a second pick-up device configured for picking up said looped anchoring annular structure from said unload handling device in order to automate the process as much as possible.

Preferably said second pick-up device is movable between said unload handling device and a moving-away device.

Further characteristics and advantages will be clearer from the detailed description of a preferred but not exclusive embodiment of a process and an apparatus for looping anchoring annular structures in accordance with the present invention.

Such description will be set forth hereinbelow with reference to the enclosed drawings, provided only as a non-limiting example, in which:
- figure 1 is a schematic longitudinal section view of an anchoring annular structure;
- figure 2 is a schematic longitudinal section view of a looped anchoring annular structure;
- figure 3 is a schematic plan view of an apparatus for looping anchoring annular structures of a tyre for vehicle wheels according to the present invention;
- figure 4 is a schematic longitudinal section view of a looping drum. With reference to figure 3, reference number 1 overall indicates an apparatus for looping anchoring annular structures of a tyre for vehicle wheels, hereinbelow indicated in brief as apparatus 1.

The looping is a process actuated on anchoring annular structures 100 in order to obtain respective looped anchoring annular structures 200. The latter are used in building tyre carcass structures. In particular, they are positioned at the beads of the tyre and are intended to maintain the tyre fixed to the anchorage seat suitably provided in the wheel rim of the vehicle.

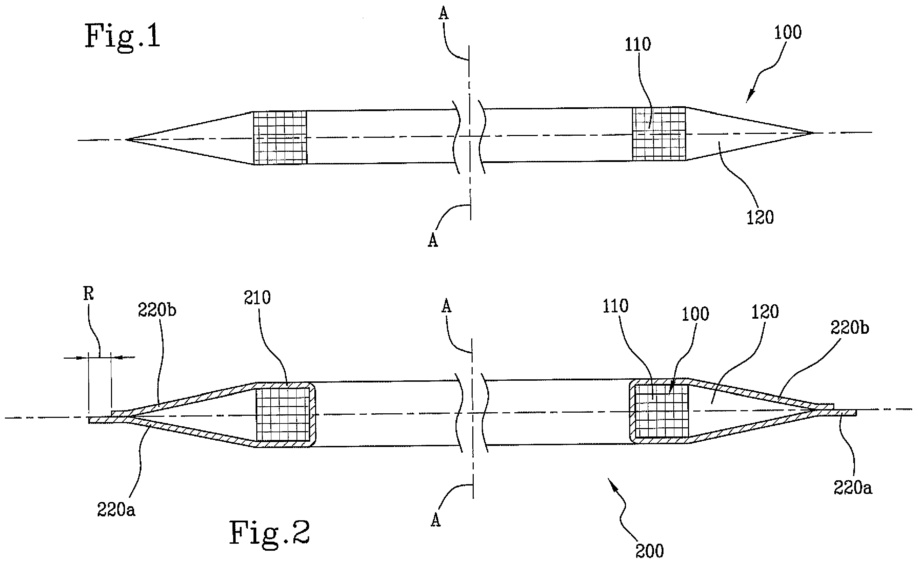

One embodiment of an anchoring annular structure 100 intended to be looped is illustrated in figure 1 and comprises a substantially circumferential annular insert 110, also termed bead core, and a filler insert 120. The filler insert 120 is associated with the annular insert 110 in radially outer position with respect to the latter. A-A indicates an extension axis of the anchoring annular structure 100 defining an axis of symmetry of the bead core and of the filler insert.

One embodiment of a looped anchoring annular structure 200 is illustrated in figure 2 and comprises the anchoring annular structure 100 and a loop 210. A central portion of the loop 210 is coupled to the radially inner surface of the anchoring annular structure 100. Opposite flaps 220a, 220b of the loop 210 are turned-up around the anchoring annular structure 100 in a manner so as to completely enclose the latter. Preferably, the end portions of the end flaps 220a, 220b of the loop 210 are offset in radial direction by a distance R (termed "scaling") which can be comprised between about 4 mm and about 10 mm. Also in the case of the looped anchoring annular structure 200 with A-A, the extension axis has been indicated.

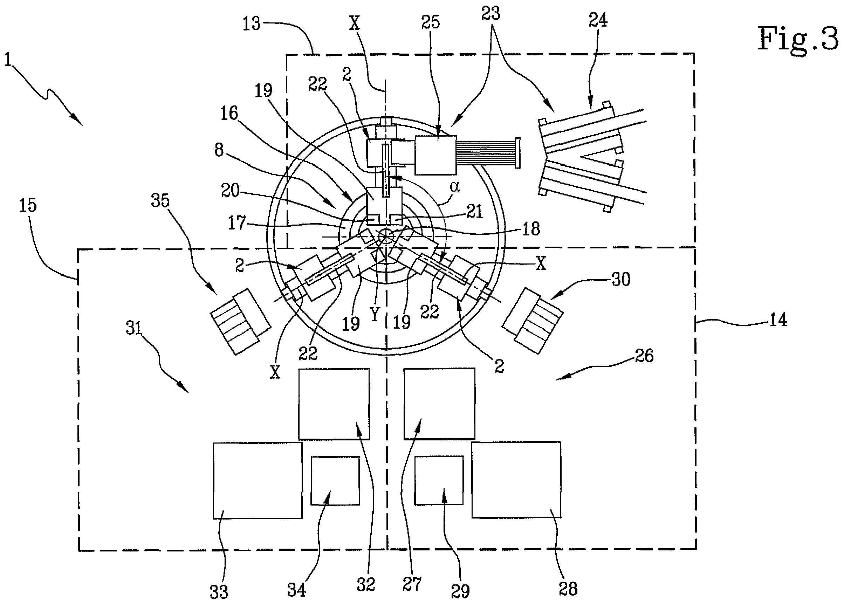

With reference to figure 3, the apparatus 1 comprises at least three looping drums 2. Each looping drum 2 has a longitudinal axis X-X thereof around which the looping drum is concentrically extended.

Each looping drum 2 is radially expandable/contractible with respect to the longitudinal axis X-X in a manner so as to turn up the loop 210 around the anchoring annular structure 100.

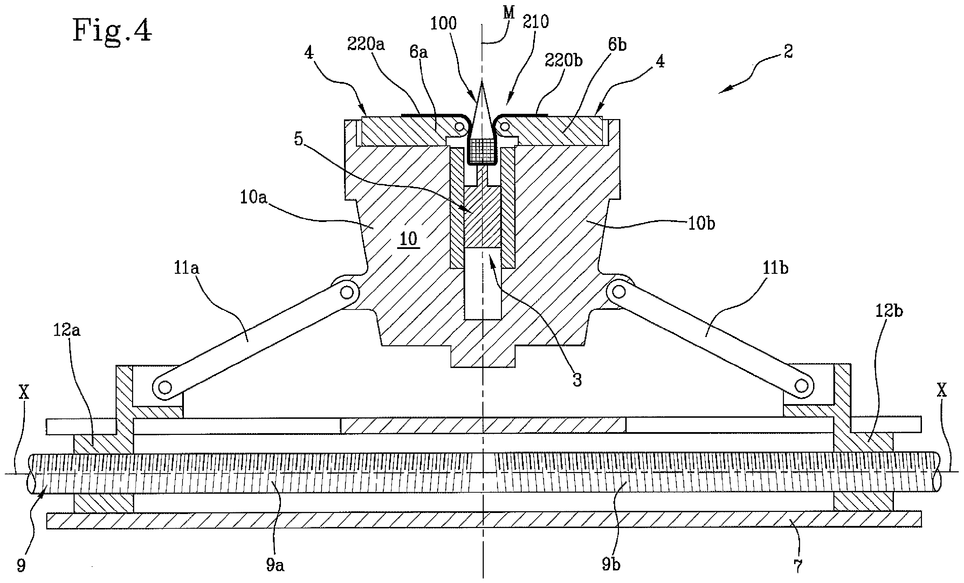

One embodiment of a looping drum 2 is illustrated in figure 4 during the looping of an anchoring annular structure 100.

The looping drum 2 comprises an intermediate annular portion 3 and, in a position axially adjacent to the opposite axial ends of the intermediate annular portion 3, a pair of lateral annular portions 4.

The intermediate annular portion 3 and/or the lateral annular portions 4 are radially expandable/contractible. In particular the lateral annular portions 4 are independently radially expandable/contractible with respect to the intermediate annular portion 3.

Preferably, the intermediate annular portion 3 can comprise a plurality of identical, circumferentially adjacent intermediate angular sectors 5.

Preferably, each of the lateral annular portions 4 can comprise a plurality of identical, circumferentially adjacent lateral angular sectors 6a, 6b. The lateral angular sectors 6a, 6b of each lateral annular portion 4 are arranged mirrored with respect to a centreline plane M of the looping drum 2.

The looping drum 2 also comprises, in radially inner position with respect to the intermediate angular sectors 5 and to the lateral angular sectors 6a, 6b, a hub 7 extended coaxially with the longitudinal axis X-X. The hub 7 is adapted to be projectingly fixed on a turret transfer apparatus 8 of the apparatus 1, as will be described hereinbelow in the present invention.

The hub 7 can be made in sleeve form, at whose interior, and coaxially with the longitudinal axis X-X, a worm screw 9 is provided having two opposite axial portions, e.g. a first axial right-hand portion 9a and, on the opposite side with respect to the centreline plane M of the looping drum 2, a second lefthand axial portion 9b.

The screw 9 is supported inside the hub 7 by means of a pair of rolling bearings, not illustrated. Such screw 9 can be rotated by a suitable motor group, also not illustrated.

Each axial portion 9a, 9b of the screw 9 is arranged in radially inner position with respect to respective lateral angular sectors 6a, 6b.

With reference to the specific embodiment of the looping drum 2, in radially inner position with respect to each pair of lateral angular sectors 6a, 6b, a support body 10 is provided. Such support body 10 comprises two support body portions 10a, 10b arranged symmetrically on axially opposite sides with respect to the centreline plane M of the looping drum 2. Each support body portion 10a 10b is arranged in radially inner position with respect to a lateral angular sector 6a, 6b of one of the lateral annular portions 4.

The intermediate annular portion 3 and/or the lateral annular portions 4 are expandable/contractible with respect to the hub 7. In particular the intermediate angular sectors 5 and/or the lateral angular sectors 6a, 6b can be subjected to a synchronous radial movement with respect to the hub 7. Each lateral annular portion 4 can be axially movable with respect to the hub 7. In particular the lateral angular sectors 6a, 6b of each lateral annular portion 4 can be subjected to a synchronous and opposite radial movement with respect to the hub 7 and with respect to the intermediate annular portion 3.

Each lateral annular portion 4 is configured and arranged with respect to the hub 7 in a manner so as to exert a thrust stress on the respective flap 220a, 220b of the loop 210 following the synchronous radial movement and the synchronous axial movement of the respective lateral angular sectors 6a, 6b with respect to the hub 7.

The synchronous radial movement of the lateral angular sectors 6 with respect to the hub 7 can be achieved by means of a screw-nut screw coupling. For example, a respective lever 11a and 11b is pivoted on each support body portion 10a and 10b. Each lever 11a and 11b is further pivoted to a nut screw 12a, 12b coupled to a respective axial portion 9a, 9b of the screw 9.

Due to the screw-nut/screw coupling, a rotation of the screw 9 produces a synchronous axial movement of the nut screws 12a, 12b in opposite directions and consequently a synchronous radial movement of the support body 10 defining a radial expansion or a radial contraction of the lateral annular portions 6a, 6b as a function of the rotation sense of the screw 9. The synchronous and opposite axial movement of the lateral annular portions 4, and in particular of the respective lateral angular sectors 6a, 6b, can be obtained by means of pneumatic, elastic elements or the like, not illustrated, interposed between the support body 10 and each lateral angular sector 6a, 6b.

The synchronous radial movement of the intermediate angular sectors 5 can be obtained by means of pneumatic, elastic elements or the like, not illustrated, interposed between the support body 10 and each intermediate angular sector 5.

The operation of a looping drum 2 as described above can be the following.

Initially, the looping drum 2 is situated in a configuration of maximum radial contraction and is radially expanded until an operative diameter is reached, selected as a function of a fitting diameter of a tyre to be built. Such radial expansion is attained due to the simultaneous and synchronous radial movement of the intermediate angular sectors 5 and of the lateral angular sectors 6a, 6b. This occurs for example following a rotation of the screw 9 which generates a synchronous axial, mutual approaching movement of the nut screws 12a and 12b and, due to the consequent movement of the levers 11a and 11b, a synchronous radial movement in radially outer direction of the support bodies 10a, 10b and hence of the lateral angular sectors 6a, 6b associated therewith and of the intermediate angular sectors 5.

For the deposition of the loop 210, the looping drum 2 can be rotated around the longitudinal axis X-X by decoupling the screw 9 from the drum in order to prevent further radial expansions or contractions of the drum itself. At the end of the deposition of the loop 210, the end flaps 220a 220b of the loop are respectively positioned on at least part of each respective lateral angular sector 6 and an intermediate portion of the loop 210 is positioned on each intermediate angular sector 5. Preferably, the position of the loop 5 is asymmetric with respect to the centreline plane M of the looping drum 2. Subsequently, the anchoring annular structure 100 is positioned in radially outer position with respect to the loop 210.

The turning up of the end flaps 220a, 220b of the loop 210 can be obtained due to the radial expansion of only the lateral annular portions 4 and the simultaneous axial movement of the lateral angular sectors 6a, 6b. The radial expansion of the lateral annular portions 4 is obtained due to the synchronous movement of only the lateral angular sectors 6a, 6b, for example as previously described. Preferably the radial movement of the intermediate angular sectors 5 is prevented.

The simultaneous synchronous axial movement of the lateral angular sectors 6a, 6b is obtained progressively as the lateral angular sectors 6a, 6b are moved radially outward, due to an axial thrust exerted for example by elastic or pneumatic elements or the like, until the anchoring annular structure 100 is completely enclosed by the loop 210. A looped anchoring annular structure 200 is thus obtained.

By reversing the rotation sense of the screw 9, the lateral annular portions 4 are contracted.

With reference to figure 3, the looping apparatus 1 comprises the turret transfer apparatus 8 centrally arranged with respect to a plurality of stations comprising at least one loop deposit station 13, a loading station 14 configured for loading the anchoring annular structures 100 on the looping drum 2 and an unloading station 15 configured for unloading the looped anchoring annular structures 200 from the looping drum 2.

The loop deposit station 13, the loading station 14 and the unloading station 15 are angularly offset from each other.

The turret transfer apparatus 8 is configured for supporting the looping drums 2 in positions angularly offset with respect to each other, in accordance with the aforesaid stations. In accordance with the illustrated embodiment, the angular offset α between the positions of said looping drums 2 is equal to about 120°.

The turret transfer apparatus 8 is configured for transferring the looping drums 2 between the loop deposit station 13, the loading station 14 and the unloading station 15 rotating around a substantially vertical transfer axis Y. In particular the looping drums 2 are supported by the turret transfer apparatus with substantially horizontal longitudinal axis X-X and transferred between the loop deposit station 13, the loading station 14 and the unloading station 15. The turret transfer apparatus 8 comprises a rotary table 16 managed for example by a brushless motor integrated with a precision wheel 17. The wheel has a central hole 18 suitable for receiving and carrying the pneumatic and electrical connections to the looping drums 2.

The rotary table 16 supports each looping drum 2 by means of a respective drum-carrier turret 19 comprising, for example, a first gear motor 20 for the rotation of the looping drum 2, a second gear motor 21 for the radial expansion of the sectors of the looping drum 2, a coupling group 22 that ensures the locking of the head of the loop during winding on the looping drum 2.

In accordance with one possible embodiment, the looping cycle is of oscillating type. In other words, a looping drum 2 associated with the turret transfer apparatus 8 is transferred from the loop deposit station 13 to the loading station 14 with a first rotation preferably of 120° of the turret transfer apparatus 8. Subsequently, the looping drum 2 is transferred from the loading station 14 to the unloading station 15 with a second rotation preferably of about 120° of the turret transfer apparatus 8. Subsequently, the looping drum 2 returns into the loop deposit station 13 with a rotation of the turret transfer apparatus 8 of 240° in opposite sense with respect to the first and second rotation.

Alternatively, the looping cycle is continuous, i.e. attained by means of rotations that are always concordant with each other.

The loop deposit station 13 comprises at least one device for feeding the loop 23 configured for feeding the loop 210 towards the looping drum 2. The loop feeding device 23 comprises at least one reel, preferably two reels 24 of continuous elongated material which, once cut, defines the loop 210. The loop feeding device 23 also comprises a cutting and deposit group 25 configured for supporting and centring the loop 210 before the feed, positioning it on the looping drum 2.

In the loop deposit station 13, after the coupling group 22 has locked the head of the loop, the looping drum 2 is rotated around the longitudinal axis X-X in order to lay the loop 210 flat on the radially outer surface of the lateral angular sectors 6 and of the intermediate angular sectors 5.

The loading station 14 comprises loading equipment 26 configured for loading the anchoring annular structures 100 on the looping drum 2.

One embodiment of loading equipment 26, illustrated in fig. 3, comprises a load handling device 27 configured for centring the anchoring annular structure 100 before the same is loaded on the looping drum 2. In particular the load handling device 27 is configured for receiving the anchoring annular structure 100 and bringing it into a loading configuration, i.e. with the extension axis A-A parallel to a longitudinal axis X-X of a looping drum at the loading station.

The load handling device 27 can comprise sensors adapted for verifying the correct diameter of the picked-up anchoring annular structure and a plurality of pick-up fingers that are radially movable with respect to the extension axis A-A in a synchronous and self-centring manner, in order to retain the anchoring annular structure at radially inner portions.

The load handling device 27 is preferably multi-fitting and does not require a manual set-up upon size change.

The loading equipment 26 also comprises a supply station, comprising a supply device 28 and a first pick-up device 29 configured for picking up the anchoring annular structure 100 from the supply device 28 and arranging it on the load handling device 27.

The supply device 28 allows supplying the anchoring annular structures 100 arranged in a preferred but not exclusive supply configuration, wherein the extension axis A-A is vertically arranged.

The first pick-up device 29 can comprise magnetic devices pneumatically driven in order to grasp one anchoring annular structure at a time.

The load handling device 27, once the anchoring annular structure 100 has been received from the first pick-up device 29 and after having carried out a centring thereof, transfers such structure to a loader 30, also multi-fitting, which in turn transfers it onto the looping drum 2 with a movement coaxial with the longitudinal axis X-X- thereof.

The load handling device 27 can be configured for rotating the anchoring annular structures 100 from the supply configuration to the loading configuration. In particular the load handling device 27 can be configured for rotating 90° each anchoring annular structure 100.

The unloading station 15 comprises unloading equipment 31 configured for unloading the looped anchoring annular structures 200 from the looping drum 2 arranged in the unloading station 15.

In particular the unloading station 15 can be substantially mirrored with respect to the loading station 14.

One embodiment of unloading equipment 31, illustrated in fig. 3, comprises an unloader 35 configured for receiving the looped anchoring annular structure 200 with the extension axis A-A parallel to a longitudinal axis X-X of the looping drum and an unload handling device 32, which can be structurally similar to the load handling device 27.

The unloading equipment 31 also comprises a moving-away station, defined for example by a moving-away device 33 and a second pick-up device 34 configured for picking up the looped anchoring annular structure 200 from the unload handling device 32 and arranging it on the moving-away device 33. The second pick-up device 34 can be structurally and functionally similar to the first pick-up device 29.

The second pick-up device 34 is movable between the unload handling device 32 and a deposition position in proximity to the moving-away device 33.

The unload handling device 32 can be configured for rotating each looped anchoring annular structure 200 from an unloading configuration to a moving-away configuration, different with respect to the unloading configuration. In particular the unload handling device 32 can be configured for rotating 90° each looped anchoring annular structure 200.

The second pick-up device 34 can comprise magnetic devices pneumatically driven in order to grasp one anchoring annular structure at a time.

In an apparatus as described above, it is possible to actuate a process for looping anchoring annular structures according to the present invention. The looping process is part of a process for building tyres for vehicle wheels.

With reference to the apparatus 1, a looping cycle of the looping process provides for depositing the loop 210 on an annular portion 3, 4 of the outer annular surface of a looping drum 2, at the loop deposit station 13.

At least partly simultaneously with the deposit of the loop in the loop deposit station 13, the looping cycle provides, at the loading station 14, for loading an anchoring annular structure 100 on a looping drum 2 different from that arranged in the loop deposit station 13, in radially outer position with respect to a loop 210 already deposited.

At least partly simultaneously with the depositing of the loop in the loop deposit station 13 and with the loading of the anchoring annular structure 100 in the loading station 14, the looping cycle provides, at the unloading station 15, for unloading a looped anchoring annular structure 200 from a looping drum 2 different from those respectively arranged in the loop deposit station 13 and in the loading station 14.

The looping cycle also provides for transferring each looping drum between the loop deposit station 13, the loading station 14 and the unloading station 15.

The looping cycle also provides for turning up each of the opposite end flaps 220a 220b of the loop 210 on the anchoring annular structure 100 so as to form a looped anchoring annular structure 200. Such action is at least partially carried out during the transfer of a looping drum 2 from the loading station 14 to the unloading station 15.

With reference to the apparatus 1 and considering a looping drum 2 arranged in the loop deposit station 13, one proceeds to deposit the loop 210, for example as described above. In particular, the coupling group 22 locks the head of the loop provided by the loop feeding device 23. The looping drum 2 is rotated around the longitudinal axis X-X until the 210 loop is completely deposited.

The turret transfer apparatus 8 completes a rotation of 120° and transfers the looping drum 2 from the loop deposit station 13 to the loading station 14. Meanwhile, the anchoring annular structures 100 are supplied in the supply configuration by means of the supply device 28 in order to be loaded on the looping drum 2, arranged in the loading station 14.

In order to be loaded on the looping drum 2 arranged in the loading station 14, an anchoring annular structure 100 is picked up from the supply device by means of the first pick-up device 29, centred on the load handling device 27, transferred by the latter to the loader 30 and fit on the looping drum 2 in radially outer position with respect to the already-laid loop 210.

The turret transfer apparatus 8 then completes a further rotation of 120° and transfers the looping drum 2 from the loading station 14 to the unloading station 15. During such transfer, the looping drum 2 is driven, for example as previously described with reference to the operation of the looping drum illustrated in figure 4. In particular during the transfer of the looping drum from the loading station 14 to the unloading station 15, each of the opposite end flaps 220a 220b of the loop 210 is turned up on the anchoring annular structure 100 due to a radial expansion/contraction of the looping drum 2. When the drum has reached the unloading station 15, in order to unload the looped anchoring annular structure 20, the latter is transferred from the looping drum 2 onto the unloader 35, then from the unloader 35 to the unload handling device 32, and then picked up by the second pick-up device 34, arranged on the moving-away device 33.

## Claims

1. Process for looping anchoring annular structures in a process for building tyres for vehicle wheels, comprising:
a) depositing a loop (210) on an annular portion of a radially outer surface of a radially expandable/contractible looping drum (2), at a loop deposit station (13);
b) loading an anchoring annular structure (100) on the looping drum (2) in a radially outer position with respect to said loop (210), at a loading station (14) configured for loading the anchoring annular structure (100) on the looping drum (2);
c) turning up each of the opposite end flaps (220a, 220b) of said loop (210) on said anchoring annular structure (100) so as to form a looped anchoring annular structure (200);
d) unloading, from the looping drum (2), the looped anchoring annular structure (200), at an unloading station (15) configured for unloading the looped anchoring annular structure (200) from the looping drum (2);
e) transferring the looping drum (2) between the loop deposit station (13), the loading station (14) and the unloading station (15);
**characterised in that** at least the actions a), b) and d) are at least partly carried out simultaneously with each other, respectively on at least three different looping drums (2); and **in that** the action c) is at least partially carried out during the transfer of the looping drum (2) from the loading station (14) to the unloading station (15).

2. Process for looping anchoring annular structures as claimed in claim 1, wherein said loop deposit station (13), loading station (14) and unloading station (15) are angularly offset from each other.

3. Process for looping anchoring annular structures as claimed in claim 2, wherein said looping drums (2) are supported by a turret transfer apparatus (8) in positions angularly offset with respect to each other and wherein the transfer of the looping drum (2) between the loop deposit station (13), the loading station (14) and the unloading station (15) is obtained by rotating said turret apparatus (8) around a substantially vertical transfer axis (Y).

4. Process for looping anchoring annular structures as claimed in claim 3, wherein said looping drums (2) are supported by said turret transfer apparatus (8) and transferred between the loop deposit station (13), the loading station (14) and the unloading station (15) with substantially horizontal longitudinal axis (X-X).

5. Process for looping anchoring annular structures as claimed in one or more of the preceding claims, wherein loading an anchoring annular structure (100) on the looping drum (2) comprises centring said anchoring annular structure (100) on a load handling device (27) before loading it on the looping drum (2).

6. Process for looping anchoring annular structures as claimed in claim 5, comprising supplying said anchoring annular structures (100) in a supply configuration by means of a supply device (28), wherein loading an anchoring annular structure (100) on the looping drum (2) comprises picking up said anchoring annular structure (100) from the supply device (28) by means of a first pick-up device (29) and wherein in order to be loaded on a looping drum (2), said anchoring annular structure (100) is picked up from the supply device (28) by means of said first pick-up device (29), arranged and centred on said load handling device (27), transferred to a loader (30) and fit on the looping drum (2).

7. Process for looping anchoring annular structures as claimed in one or more of the preceding claims, comprising moving away said looped anchoring annular structures (200) in a moving-away configuration, wherein said looped anchoring annular structures (200) are moved away by means of a moving-away device (33).

8. Process for looping anchoring annular structures as claimed in one or more of the preceding claims, wherein unloading a looped anchoring annular structure (200) from the looping drum (2) comprises picking up said looped anchoring annular structure (200) by means of a second pick-up device (34).

9. Process for looping anchoring annular structures as claimed in one or more of the preceding claims, wherein the action c) is carried out due to a radial expansion/contraction of the looping drum (2).

10. Apparatus (1) for looping anchoring annular structures of a tyre for vehicle wheels, the apparatus comprising:
- at least three looping drums (2), wherein each looping drum (2) has a longitudinal axis (X-X) thereof and is radially expandable/contractible with respect to said longitudinal axis (X-X);
- a loop deposit station (13) comprising at least one device for feeding the loop (23) towards the looping drum (2);
- a loading station (14) configured for loading anchoring annular structures (100) on the looping drum (2) comprising loading equipment (26);
- an unloading station (15) configured for unloading looped anchoring annular structures (200) from the looping drum (2) comprising unloading equipment (31);
wherein said loop deposit station (13), loading station (14) and unloading station (15) are angularly offset from each other;
- a turret transfer apparatus (8) on which said looping drums (2) are supported in positions angularly offset from each other,
wherein said turret transfer apparatus (8) is configured for transferring said looping drums (2) between the loop deposit station (13), the loading station (14) and the unloading station (15) by rotating around a transfer axis (Y); wherein each looping drum (2) is configured for at least partially turning up said loop (210) around said anchoring structure (100) during its transfer from said loading station (14) to said unloading station (15).

11. Apparatus for looping anchoring annular structures as claimed in claim 10, wherein said looping drums (2) are supported on said turret transfer apparatus (8) in positions angularly offset from each other in accordance with said loop deposit station (13), loading station (14) and unloading station (15).

12. Apparatus for looping anchoring annular structures as claimed in claim 10 or 11, wherein said transfer axis (Y) is substantially vertical.

13. Apparatus for looping anchoring annular structures as claimed in one or more of the claims 10-12, wherein said loading equipment (26) comprises a load handling device (27) configured for centring said anchoring annular structure (100) before fitting it on the looping drum (2).

14. Apparatus for looping anchoring annular structures as claimed in one or more of the claims 10-13, wherein said unload handling device (31) comprises an unloader (35) configured for receiving said looped anchoring annular structure (200) and transferring it to an unload handling device (32).

15. Apparatus for looping anchoring annular structures as claimed in claim 14, wherein said unloading equipment (31) comprises a second pick-up device (34) configured for picking up said looped anchoring annular structure (200) from said unload handling device (32).

## Patentansprüche

1. Verfahren zum Wickeln von ringförmigen Verankerungsstrukturen in einem Verfahren zur Herstellung von Reifen für Fahrzeugräder, wobei das Verfahren zum Wickeln die folgenden Schritte umfasst:
a) Ablegen der Wicklung (210) an einem ringförmigen Abschnitt einer radial äußeren Oberfläche einer radial expandierbaren/kontrahierbaren Wicklungstrommel (2) an einer Wicklungsablegestation (13);
b) Laden einer ringförmigen Verankerungsstruktur (100) auf die Wicklungstrommel (2) in einer radial äußeren Position in Bezug auf die Wicklung (210), an einer Ladestation (14), die dazu ausgestaltet ist, die ringförmige Verankerungsstruktur (100) auf die Wicklungstrommel (2) zu laden;
c) Umstülpen jeder der gegenüberliegenden Endklappen (220a, 220b) der Wicklung (210) um die ringförmige Verankerungsstruktur (100), um eine umwickelte ringförmige Verankerungsstruktur (200) zu bilden;
d) Entladen der umwickelten ringförmigen Verankerungsstruktur (200) von der Wicklungstrommel (2) an einer Entladestation (15), die dazu ausgestaltet ist, die umwickelte ringförmige Verankerungsstruktur (200) von der Wicklungstrommel (2) zu entladen;
e) Übertragen der Wicklungstrommel (2) zwischen der Wicklungsablegestation (13), der Ladestation (14) und der Entladestation (15);
**dadurch gekennzeichnet, dass**
zumindest die Schritte a), b) und d) zumindest teilweise gleichzeitig miteinander ausgeführt werden, jeweils an drei unterschiedlichen Wicklungstrommeln (2); und
dass der Schritt c) zumindest zum Teil während der Übertragung der Wicklungstrommel (2) von der Ladestation (14) zu der Entladestation (15) ausgeführt wird.

2. Verfahren zum Wickeln von ringförmigen Verankerungsstrukturen nach Anspruch 1, wobei die Wicklungsablegestation (13), die Ladestation (14) und die Entladestation (15) winkelmäßig zueinander versetzt sind.

3. Verfahren zum Wickeln von ringförmigen Verankerungsstrukturen nach Anspruch 2, wobei die Wicklungstrommeln (2) durch eine Rondell-Übertragungsvorrichtung (8) in Stellungen getragen werden, die winkelmäßig in Bezug aufeinander versetzt sind, und wobei die Übertragung der Wicklungstrommel (2) zwischen der Wicklungsablegestation (13), der Ladestation (14) und der Entladestation (15) erzielt wird, indem die Rondellvorrichtung (8) um eine im Wesentlichen vertikale Übertragungsachse (Y) gedreht wird.

4. Verfahren zum Wickeln von ringförmigen Verankerungsstrukturen nach Anspruch 3, wobei die Wicklungstrommeln (2) von der Rondell-Übertragungsvorrichtung (8) getragen und zwischen der Wicklungsablegestation (13), der Ladestation (14) und der Entladestation (15) mit im Wesentlichen horizontaler Längsachse (X-X) übertragen werden.

5. Verfahren zum Wickeln von ringförmigen Verankerungsstrukturen nach einem oder mehreren der vorhergehenden Ansprüche, wobei das Laden einer ringförmigen Verankerungsstruktur (100) auf die Wicklungstrommel (2) das Zentrieren der ringförmigen Verankerungsstruktur (100) auf einer Lade-Manipulationsvorrichtung (27) vor dem Laden auf die Wicklungstrommel (2) umfasst.

6. Verfahren zum Wickeln von ringförmigen Verankerungsstrukturen nach Anspruch 5, umfassend das Zuführen der ringförmigen Verankerungsstrukturen (100) in einer Zuführkonfiguration mittels einer Zuführeinrichtung (28), wobei das Laden einer ringförmigen Verankerungsstruktur (100) auf die Wicklungstrommel (2) das Aufnehmen der ringförmigen Verankerungsstruktur (100) von der Zuführeinrichtung (28) mittels einer ersten Aufnahmeeinrichtung (29) umfasst, und wobei, um auf eine Wicklungstrommel (2) geladen zu werden, die ringförmige Verankerungsstruktur (100) von der Zuführeinrichtung (28) mittels der ersten Aufnahmeeinrichtung (29) aufgenommen, auf der Lade-Manipulationsvorrichtung (27) angeordnet und zentriert, auf einen Lader (30) übertragen und auf die Wicklungstrommel (2) gesetzt wird.

7. Verfahren zum Wickeln von ringförmigen Verankerungsstrukturen nach einem oder mehreren der vorhergehenden Ansprüche, umfassend das Wegbewegen der umwickelten ringförmigen Verankerungsstrukturen (200) in einer Wegbewegungskonfiguration, wobei die umwickelten ringförmigen Verankerungsstrukturen (200) mittels einer Wegbewegungseinrichtung (33) wegbewegt werden.

8. Verfahren zum Wickeln von ringförmigen Verankerungsstrukturen nach einem oder mehreren der vorhergehenden Ansprüche, wobei das Entladen einer umwickelten ringförmigen Verankerungsstruktur (200) von der Wicklungstrommel (2) das Aufnehmen der umwickelten ringförmigen Verankerungsstruktur (200) mittels einer zweiten Aufnahmeeinrichtung (34) umfasst.

9. Verfahren zum Wickeln von ringförmigen Verankerungsstrukturen nach einem oder mehreren der vorhergehenden Ansprüche, wobei der Schritt c) aufgrund einer radialen Expansion/Kontraktion der Wicklungstrommel (2) erfolgt.

10. Vorrichtung (1) zum Wickeln von ringförmigen Verankerungsstrukturen eines Reifens für Fahrzeugräder, wobei die Vorrichtung umfasst:
- zumindest drei Wicklungstrommeln (2), wobei jede Wicklungstrommel (2) eine Längsachse (X-X) aufweist und radial in Bezug auf die Längsachse (X-X) expandierbar/kontrahierbar ist;
- eine Wicklungsablegestation (13) umfassend zumindest eine Einrichtung zum Zuführen der Wicklung (23) zu der Wicklungstrommel (2) hin;
- eine Ladestation (14), die dazu ausgestaltet ist, ringförmige Verankerungsstrukturen (100) auf die Wicklungstrommel (2) zu laden, und eine Ladeausrüstung (26) umfasst;
- eine Entladestation (15), die dazu ausgestaltet ist, umwickelte ringförmige Verankerungsstrukturen (200) von der Wicklungstrommel (2) zu entladen, und eine Entladeausrüstung (31) umfasst;
wobei die Wicklungsablegestation (13), die Ladestation (14) und die Entladestation (15) winkelmäßig zueinander versetzt sind;
- eine Rondell-Übertragungsvorrichtung (8), auf welcher die Wicklungstrommeln (2) in winkelmäßig zueinander versetzten Stellungen getragen werden,
wobei die Rondell-Übertragungsvorrichtung (8) dazu ausgestaltet ist, die Wicklungstrommeln (2) zwischen der Wicklungsablegestation (13), der Ladestation (14) und der Entladestation (15) durch Drehen um die Übertragungsachse (Y) zu übertragen;
wobei jede Wicklungstrommel (2) dazu ausgestaltet ist, die Wicklung (210) zumindest zum Teil um die Verankerungsstruktur (100) während ihrer Übertragung von der Ladestation (14) auf die Entladestation (15) umzustülpen.

11. Vorrichtung zum Wickeln von ringförmigen Verankerungsstrukturen nach Anspruch 10, wobei die Wicklungstrommeln (2) an der Rondell-Übertragungsvorrichtung (8) in Stellungen getragen werden, die winkelmäßig voneinander versetzt und mit der Wicklungsablegestation (13), Ladestation (14) und Entladestation (15) in Übereinstimmung sind.

12. Vorrichtung zum Wickeln von ringförmigen Verankerungsstrukturen nach Anspruch 10 oder 11, wobei die Übertragungsachse (Y) im Wesentlichen vertikal ist.

13. Vorrichtung zum Wickeln von ringförmigen Verankerungsstrukturen nach einem oder mehreren der Ansprüche 10-12, wobei die Ladeausrüstung (26) eine Lade-Manipulationsvorrichtung (27) umfasst, die dazu ausgestaltet ist, die ringförmige Verankerungsstruktur (100) zu zentrieren, bevor sie auf die Wicklungstrommel (2) gesetzt wird.

14. Vorrichtung zum Wickeln von ringförmigen Verankerungsstrukturen nach einem oder mehreren der Ansprüche 10-13, wobei die Entlade-Manipulationsvorrichtung (31) einen Entlader (35) umfasst, der dazu ausgestaltet ist, die umwickelte ringförmige Verankerungsstruktur (200) aufzunehmen und sie auf eine Entlade-Manipulationsvorrichtung (32) zu entladen.

15. Vorrichtung zum Wickeln von ringförmigen Verankerungsstrukturen nach Anspruch 14, wobei die Entladeausrüstung (31) eine zweite Aufnahmeeinrichtung (34) umfasst, die dazu ausgestaltet ist, die umwickelte ringförmige Verankerungsstruktur (200) von der Entlade-Manipulationsvorrichtung (32) aufzunehmen.

## Revendications

1. Procédé pour boucler des structures annulaires d'ancrage dans un procédé de construction de pneus pour roues de véhicule, comprenant le fait :
a) de déposer une boucle (210) sur une partie annulaire d'une surface radialement externe d'un tambour de bouclage radialement extensible/rétractable (2), au niveau d'une station de dépôt de boucle (13) ;
b) de charger une structure annulaire d'ancrage (100) sur le tambour de bouclage (2) dans une position radialement externe par rapport à ladite boucle (210), au niveau d'une station de chargement (14) configurée pour charger la structure annulaire d'ancrage (100) sur le tambour de bouclage (2) ;
c) de retourner chacun des rabats d'extrémité opposés (220a, 220b) de ladite boucle (210) sur ladite structure annulaire d'ancrage (100) de manière à former une structure annulaire d'ancrage en boucle (200) ;
d) de décharger, du tambour de bouclage (2), la structure annulaire d'ancrage en boucle (200), au niveau d'une station de déchargement (15) configurée pour décharger la structure annulaire d'ancrage en boucle (200) du tambour de bouclage (2) ;
e) de transférer le tambour de bouclage (2) entre la station de dépôt de boucle (13), la station de chargement (14) et la station de déchargement (15) ;
**caractérisé en ce que**
au moins les actions a), b) et d) sont effectuées au moins partiellement simultanément, respectivement sur au moins trois tambours de bouclage différents (2) ; et
**en ce que**
l'action c) est effectuée au moins partiellement pendant le transfert du tambour de bouclage (2) de la station de chargement (14) à la station de déchargement (15) .

2. Procédé pour boucler des structures annulaires d'ancrage tel que revendiqué dans la revendication 1, dans lequel ladite station de dépôt de boucle (13), ladite station de chargement (14) et ladite station de déchargement (15) sont décalées angulairement les unes des autres.

3. Procédé pour boucler des structures annulaires d'ancrage tel que revendiqué dans la revendication 2, dans lequel lesdits tambours de bouclage (2) sont supportés par un appareil de transfert à la tourelle (8) dans des positions décalées angulairement les unes par rapport aux autres et dans lequel le transfert du tambour de bouclage (2) entre la station de dépôt de boucle (13), la station de chargement (14) et la station de déchargement (15) est obtenu par rotation dudit appareil à la tourelle (8) autour d'un axe de transfert essentiellement vertical (Y).

4. Procédé pour boucler des structures annulaires d'ancrage tel que revendiqué dans la revendication 3, dans lequel lesdits tambours de bouclage (2) sont supportés par ledit appareil de transfert à la tourelle (8) et transférés entre la station de dépôt de boucle (13), la station de chargement (14) et la station de déchargement (15) avec un axe longitudinal essentiellement horizontal (X-X).

5. Procédé pour boucler des structures annulaires d'ancrage tel que revendiqué dans une ou plusieurs des revendications précédentes, dans lequel le chargement d'une structure annulaire d'ancrage (100) sur le tambour de bouclage (2) comprend le centrage de ladite structure annulaire d'ancrage (100) sur un dispositif de gestion de chargement (27) avant son chargement sur le tambour de bouclage (2).

6. Procédé pour boucler des structures annulaires d'ancrage tel que revendiqué dans la revendication 5, comprenant l'alimentation en lesdites structures annulaires d'ancrage (100) dans une configuration d'alimentation au moyen d'un dispositif d'alimentation (28), où le chargement d'une structure annulaire d'ancrage (100) sur le tambour de bouclage (2) comprend le prélèvement de ladite structure annulaire d'ancrage (100) du dispositif d'alimentation (28) au moyen d'un premier dispositif de prélèvement (29) et où, afin d'être chargée sur un tambour de bouclage (2), ladite structure annulaire d'ancrage (100) est prélevée du dispositif d'alimentation (28) au moyen dudit premier dispositif de prélèvement (29), agencée et centrée sur ledit dispositif de gestion de chargement (27), transférée à un chargeur (30) et ajustée sur le tambour de bouclage (2) .

7. Procédé pour boucler des structures annulaires d'ancrage tel que revendiqué dans une ou plusieurs des revendications précédentes, comprenant l'éloignement desdites structures annulaires d'ancrage en boucle (200) dans une configuration d'éloignement, où lesdites structures annulaires d'ancrage en boucle (200) sont éloignées au moyen d'un dispositif d'éloignement (33).

8. Procédé pour boucler des structures annulaires d'ancrage tel que revendiqué dans une ou plusieurs des revendications précédentes, dans lequel le déchargement d'une structure annulaire d'ancrage en boucle (200) du tambour de bouclage (2) comprend le prélèvement de ladite structure annulaire d'ancrage en boucle (200) au moyen d'un deuxième dispositif de prélèvement (34).

9. Procédé pour boucler des structures annulaires d'ancrage tel que revendiqué dans une ou plusieurs des revendications précédentes, dans lequel l'action c) est effectuée en raison d'une extension/rétraction radiale du tambour de bouclage (2).

10. Appareil (1) pour boucler des structures annulaires d'ancrage d'un pneu pour roues de véhicule, l'appareil comprenant :
- au moins trois tambours de bouclage (2), où chaque tambour de bouclage (2) a un axe longitudinal (X-X) de celui-ci et est radialement extensible/rétractable par rapport audit axe longitudinal (X-X) ;
- une station de dépôt de boucle (13) comprenant au moins un dispositif pour acheminer la boucle (23) vers le tambour de bouclage (2) ;
- une station de chargement (14) configurée pour charger des structures annulaires d'ancrage (100) sur le tambour de bouclage (2) comprenant un équipement de chargement (26) ;
- une station de déchargement (15) configurée pour décharger des structures annulaires d'ancrage en boucle (200) du tambour de bouclage (2) comprenant un équipement de déchargement (31) ;
dans lequel ladite station de dépôt de boucle (13), ladite station de chargement (14) et ladite station de déchargement (15) sont décalées angulairement les unes des autres ;
- un appareil de transfert à la tourelle (8) sur lequel lesdits tambours de bouclage (2) sont supportés dans des positions décalées angulairement les unes des autres,
dans lequel ledit appareil de transfert à la tourelle (8) est configuré pour transférer lesdits tambours de bouclage (2) entre la station de dépôt de boucle (13), la station de chargement (14) et la station de déchargement (15) par rotation autour d'un axe de transfert (Y) ;
dans lequel chaque tambour de bouclage (2) est configuré pour retourner au moins partiellement ladite boucle (210) autour de ladite structure d'ancrage (100) pendant son transfert de ladite station de chargement (14) à ladite station de déchargement (15).

11. Appareil pour boucler des structures annulaires d'ancrage tel que revendiqué dans la revendication 10, dans lequel lesdits tambours de bouclage (2) sont supportés sur ledit appareil de transfert à la tourelle (8) dans des positions décalées angulairement les unes des autres selon ladite station de dépôt de boucle (13), ladite station de chargement (14) et ladite station de déchargement (15).

12. Appareil pour boucler des structures annulaires d'ancrage tel que revendiqué dans la revendication 10 ou 11, dans lequel ledit axe de transfert (Y) est essentiellement vertical.

13. Appareil pour boucler des structures annulaires d'ancrage tel que revendiqué dans une ou plusieurs des revendications 10 à 12, dans lequel ledit équipement de chargement (26) comprend un dispositif de gestion de chargement (27) configuré pour centrer ladite structure annulaire d'ancrage (100) avant de l'ajuster sur le tambour de bouclage (2).

14. Appareil pour boucler des structures annulaires d'ancrage tel que revendiqué dans une ou plusieurs des revendications 10 à 13, dans lequel ledit dispositif de gestion de déchargement (31) comprend un déchargeur (35) configuré pour recevoir ladite structure annulaire d'ancrage en boucle (200) et la transférer à un dispositif de gestion de déchargement (32).

15. Appareil pour boucler des structures annulaires d'ancrage tel que revendiqué dans la revendication 14, dans lequel ledit équipement de déchargement (31) comprend un deuxième dispositif de prélèvement (34) configuré pour prélever ladite structure annulaire d'ancrage en boucle (200) dudit dispositif de gestion de déchargement (32).
